# EUROPEAN PATENT APPLICATION

(11) **EP 4 525 444 A1**
(43) Date of publication of application: **19.03.2025**
(21) Application number: 23878766.7
(22) Date of filing: 01.08.2023
(51) Int. Cl.: H04N 19/40

(54) **VIDEO TRANSCODING METHOD AND APPARATUS, AND DEVICE, STORAGE MEDIUM AND VIDEO ON-DEMAND SYSTEM**

(30) Priority: 19.10.2022 CN 202211282654
(71) Applicant: DOUYIN VISION CO., LTD., Beijing 100041 (CN); Lemon Inc., Grand Cayman, KY1-1205 (KY)
(72) Inventor: LI, Yubo, Beijing 100028 (CN); ZHAO, Junjun, Beijing 100028 (CN); ZHANG, Qingyuan, Beijing 100028 (CN); SONG, Zhiwen, Beijing 100028 (CN); ZENG, Hao, Beijing 100028 (CN)
(74) Representative: Williams, Michael David
(86) International application number: PCT/CN2023/110507
(87) International publication number: WO 2024/082770

(57) **Abstract**

A video transcoding method and apparatus, a device, a storage medium, and a video-on-demand system. The video transcoding method includes: determining a target video transcoding mode based on a video distribution scenario of a video to be transcoded (S110); and performing a transcoding operation on the video to be transcoded based on the target video transcoding mode to obtain a transcoded video file corresponding to the video to be transcoded, and store the transcoded video file, so as to generate a target playback video for playback based on the transcoded video file when a video playback request is detected (S120).

## Description

### CROSS-REFERENCE TO RELATED APPLICATION(S)

This application claims priority to Chinese Patent Application No. 202211282654.9, filed with the China National Intellectual Property Administration on October 19, 2022, which is incorporated herein by reference in its entirety.

### FIELD

The present disclosure relates to the technical field of video on demand, and for example, relates to a video transcoding method and apparatus, a device, a storage medium, and a video-on-demand system.

### BACKGROUND

Video on demand (VOD or VoD) is a system that can allow users to select the video content they want to watch through the Internet. The VoD system provides an end-to-end audio and video solution integrating media resource uploading, media resource management, multimedia processing (intelligent low-bitrate coding and video artificial intelligence (AI)), accelerated content distribution, and playback. In the video-on-demand system, video uploading, transcoding, distribution, and playback are one of core links.

Video uploading, transcoding, distribution, and playback all consume computing resources, leading to an increasingly acute contradiction between the scarcity of the computing resources and the surge in demand for computing power. Conventional transcoding solutions can no longer satisfy the business requirements for rapid implementation, timeliness, user experience, computing cost, and storage cost.

### SUMMARY

The present disclosure provides a video transcoding method and apparatus, a device, a storage medium, and a video-on-demand system, so as to solve the technical problems of unreasonable video processing and high cost in a video-on-demand system.

In a first aspect, the present disclosure provides a video transcoding method, including:
determining a target video transcoding mode based on a video distribution scenario of a video to be transcoded; and
obtaining a transcoded video file corresponding to the video to be transcoded by performing a transcoding operation on the video to be transcoded based on the target video transcoding mode, and storing the transcoded video file, so as to generate a target playback video for playback based on the transcoded video file in response to detecting a video playback request.

In a second aspect, the present disclosure further provides a video transcoding apparatus, including:
a transcoding strategy determining module, configured to determine a target video transcoding mode based on a video distribution scenario of a video to be transcoded; and
a transcoded video storage module, configured to obtaining a transcoded video file corresponding to the video to be transcoded by performing a transcoding operation on the video to be transcoded based on the target video transcoding mode, and storing the transcoded video file, so as to generate a target playback video for playback based on the transcoded video file in response to detecting a video playback request.

In a third aspect, the present disclosure further provides an electronic device. The electronic device includes:
at least one processor; and
a memory which is in communication connection with the at least one processor, where:
the memory stores a computer program executable by the at least one processor, and the computer program, when executed by the at least one processor, causes the at least one processor to perform the above video transcoding method.

In a fourth aspect, the present disclosure further provides a computer-readable storage medium, storing computer instructions. The computer instructions, when executed by a processor, are configured to implement the above video transcoding method.

In a fifth aspect, the present disclosure further provides a computer program product, including a computer program carried on a non-transitory computer-readable medium. The computer program includes program code configured to execute the above video transcoding method.

In a sixth aspect, the present disclosure further provides a video-on-demand system, including a transcoding module, a storage module, and an interaction module, where:
the transcoding module is configured to determine a target video transcoding mode based on a video distribution scenario of a video to be transcoded, to obtain a transcoded video file corresponding to the video to be transcoded by performing a transcoding operation on the video to be transcoded based on the target video transcoding mode, and to send the transcoded video file to the storage module;
the storage module is configured to store the transcoded video file; and
the interaction module is configured to receive a video playback request, to determine a playback video parameter associated with the video playback request, to obtain a target video file from the transcoding module or the storage module based on the playback video parameter, and to generate response information for the video playback request based on the target video file.

### BRIEF DESCRIPTION OF THE DRAWINGS

FIG. 1 is a schematic flowchart of a video transcoding method according to an embodiment of the present disclosure;
FIG. 2 is a structural schematic diagram of a video-on-demand system according to an embodiment of the present disclosure;
FIG. 3 is a structural schematic diagram of another video-on-demand system according to an embodiment of the present disclosure;
FIG. 4 is a structural schematic diagram of a video transcoding apparatus according to an embodiment of the present disclosure; and
FIG. 5 is a structural schematic diagram of an electronic device according to an embodiment of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, the present disclosure may be implemented in various forms, and these embodiments are provided for understanding the present disclosure. The accompanying drawings and the embodiments of the present disclosure are for exemplary purposes only.

A plurality of steps recorded in method implementations in the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are an open-ended inclusion, namely, "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". The related definitions of other terms will be provided in the subsequent description.

Concepts such as "first" and "second" mentioned in the present disclosure are only for distinguishing different apparatuses, modules, or units, and are not intended to limit the order or relation of interdependence of functions performed by these apparatuses, modules, or units.

Modifiers "one" and "a plurality of" mentioned in the present disclosure are illustrative and not restrictive, and those skilled in the art should understand that unless otherwise explicitly specified in the context, the modifiers should be understood as "one or more".

The names of messages or information exchanged between a plurality of apparatuses in the implementations of the present disclosure are provided for illustrative purposes only, and are not used to limit the scope of these messages or information.

Data (including the data itself, and data acquisition, or usage) involved in the technical solutions should comply with the requirements of corresponding laws and regulations, and relevant stipulations.

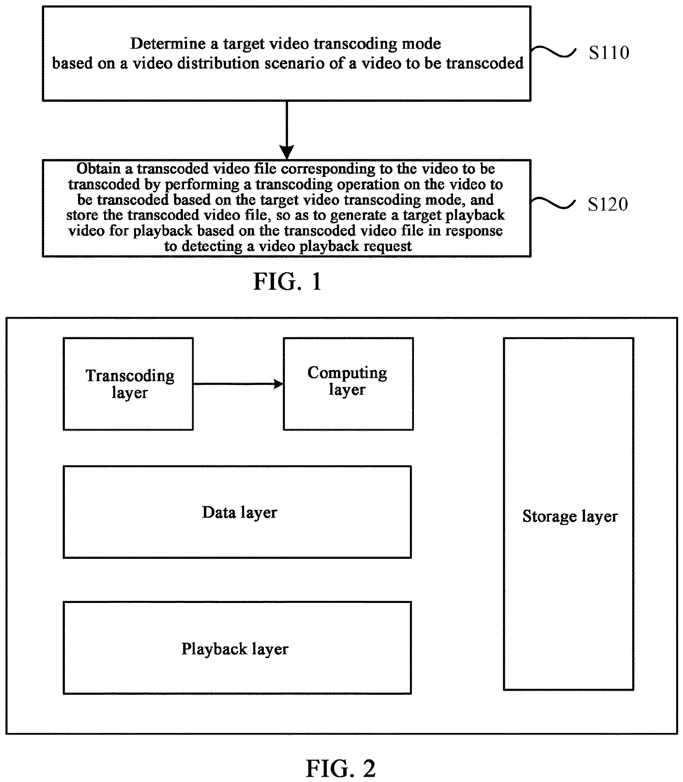

FIG. 1 is a schematic flowchart of a video transcoding method according to an embodiment of the present disclosure. This embodiment of the present disclosure is applicable to a case of transcoding a video uploaded by a user in a video-on-demand system. The method may be performed by a video transcoding apparatus, and the apparatus may be implemented in the form of software and/or hardware, and is, for example, implemented by an electronic device. The electronic device may be a mobile terminal, a personal computer (PC) terminal, a server, or the like.

As shown in FIG. 1, the method includes:
S110: Determine a target video transcoding mode based on a video distribution scenario of a video to be transcoded.

In this embodiment, the video to be transcoded may be self-created content uploaded by the user in the video-on-demand system, such as user generated content (UGC) and professional generated content (PGC). After the user uploads the above content, the video-on-demand system transcodes and distributes the above content, thereby displaying the content uploaded by the user. As the number of users in the video-on-demand system increases, the amount of content uploaded by the users also rises. Different users may be associated with different video distribution scenarios (e.g., a business scenario and a distribution region), leading to different transcoding and distribution costs for the content uploaded by the different users based on the different video distribution scenarios. Based on this, to optimize the video processing cost of the video-on-demand system based on reasonable utilization of computing resources, the target video transcoding mode for the video to be transcoded may be determined based on the video distribution scenario of the video to be transcoded, thereby reducing total cost in transcoding the video to be transcoded, as well as the storage and distribution of the transcoded video. The target video transcoding mode may include strategies such as transcoding time, a transcoding format, and a transcoding resolution for the video to be transcoded.

A correspondence relationship between video distribution scenarios and video transcoding strategies may be set. The target video transcoding mode for the video to be transcoded is determined based on the preset correspondence relationship. The correspondence relationship between the video distribution scenarios and the video transcoding strategies may be set with the goal of minimizing the total cost of video processing, and in combination with cost-associated parameters of the video distribution scenarios.

In an implementation of the present disclosure, determining a target video transcoding mode based on a video distribution scenario of a video to be transcoded includes: determining a cost-associated parameter associated with the video distribution scenario, and determining the target video transcoding mode based on the cost-associated parameter.

The cost-associated parameters may be parameters associated with a processing stage in link processing of displaying and on-demand playback of the content uploaded by the user in the video-on-demand system. A complete core link of the video-on-demand system in displaying the user-uploaded video to be transcoded and on-demand watching of the displayed video by the user mainly involves three stages: transcoding, storage, and bandwidth. In other words, the cost of processing the video by the video-on-demand system mainly includes three parts: transcoding cost, storage cost, and bandwidth cost. The transcoding cost, the storage cost, and the bandwidth cost vary in different regions. For example, the bandwidth cost is high in a region A, while overall computing resources may be high in a region B. Based on this, the target video transcoding mode for the video to be transcoded may be determined by comprehensively considering the above cost factors, including transcoding, storage, and bandwidth.

Based on the above solution, a correspondence relationship between the video transcoding strategies and the transcoding cost, as well as the storage cost, and the bandwidth cost may be set. The correspondence relationship between the video transcoding strategies and the transcoding cost, as well as the storage cost, and the bandwidth cost may be set with the goal of minimizing the sum of the transcoding cost, the storage cost, and the bandwidth cost, and in combination with the cost-associated parameters of the video distribution scenario. Exemplarily, assuming that the transcoding cost in the video distribution scenario is high and the bandwidth cost is low, the corresponding video transcoding strategy may be set to have a low transcoding resolution.

Video transcoding strategies may be divided into a static transcoding strategy, a dynamic transcoding strategy, a remaining resource scheduling strategy, and a real-time transcoding strategy based on features of the video transcoding strategies and applicable scenarios. The video to be transcoded may be transcoded through one or more of the above strategies. In other words, the target video transcoding mode includes at least one of the static transcoding strategy, the dynamic transcoding strategy, the remaining resource scheduling strategy, and the real-time transcoding strategy. The static transcoding strategy may rely only on real-time playback information rather than business data injection, and optimally trigger high-complexity transcoding to reduce the use of the computing resources while maximizing the optimization of playback experience. The dynamic transcoding strategy may rely on business data injection without relying on real-time information. When the user submits a contribution, high-complexity transcoding is cold-started and triggered to improve real-time performance and reduce bandwidth overhead, thereby reducing the use of the computing resources, and maximizing the optimization of the playback experience. The remaining resource scheduling strategy may be an advanced expansion that dynamically extends the definition of system idle time from a natural time period to a whole day. The real-time transcoding strategy may involve transcoding triggered only when the user accesses resources, thereby reducing the use of computing/storage resources and allocating the resources to higher-priority businesses.

In this embodiment, the target video transcoding mode may be implemented through a strategic model. The strategic model may be a neural network model, a data model, etc., which is not limited herein.

S120: Perform a transcoding operation on the video to be transcoded based on the target video transcoding mode to obtain a transcoded video file corresponding to the video to be transcoded, and store the transcoded video file, so as to generate a target playback video for playback based on the transcoded video file when a video playback request is detected.

After the target video transcoding mode for the video to be transcoded is determined, video transcoding is performed based on the target video transcoding mode, and the transcoded video file obtained after transcoding is stored. Assuming that the target video transcoding mode includes target transcoding time, a target transcoding resolution, and a target transcoding format, the transcoding operation is performed on the video to be transcoded at the target transcoding time to obtain and store a transcoded video file with the target transcoding resolution and the target transcoding format.

After the video to be transcoded is transcoded, the transcoded video file obtained after transcoding may be marked and stored with a transcoding strategy for subsequent data analysis. Coded color identifiers may be adaptively allocated in the transcoded video file through algorithm design so as to mark the transcoding strategies. For a scenario where the video to be transcoded is transcoded based on a plurality of different transcoding strategies to obtain transcoded video files, an algorithm may be used to inversely deduce and cover the scenario, so as to analyze independent contributions of each coding strategy as well as overlapping contributions of the plurality of transcoding strategies, thereby facilitating qualitative and quantitative data analysis. Relying on the function of the above color identifiers, a video-on-demand side may distribute a strategy based on a color identifier configuration file, thereby easily achieving file-grained traffic splitting. Additionally, relevant data for each separate strategy may be split through a strategic meta-information service.

In an implementation of the present disclosure, the target video transcoding mode is the static transcoding strategy. The transcoding operation is performed on the video to be transcoded based on the target video transcoding mode to obtain a transcoded video file corresponding to the video to be transcoded, including: obtaining video playback information of a distributed video associated with the video to be transcoded as a static strategy reference parameter; determining a static predicted popularity indicator of the video to be transcoded based on the static strategy reference parameter; and performing the transcoding operation on the video to be transcoded to obtain the transcoded video file corresponding to the video to be transcoded when the static predicted popularity indicator is higher than a set static popularity threshold.

The static transcoding strategy is a compensation strategy based on static information, which determines the transcoding method for the video to be transcoded in combination with real-time video popularity. For example, although a user does not have many followers, if the video quality is high, the popularity of the published video may also surge. Based on this, for a user, the popularity of a current video to be transcoded of the user may be predicted based on playback data of other videos of the user. When the predicted popularity of the video to be transcoded is high, the transcoding operation on the video to be transcoded may be triggered directly.
a distributed video of the user that the video to be transcoded belongs to may be obtained as an associated distributed video of the video to be transcoded, historical playback information of the associated distributed video within a set time period is obtained as video playback information of the associated distributed video, a static predicted popularity indicator is calculated based on the video playback information of the associated distributed video, and whether the transcoding operation is performed on the video to be transcoded is determined based on the static predicted popularity indicator. The set time period may be set according to actual needs, such as 5 minutes, 30 minutes, and 24 hours. The static predicted popularity indicator calculated based on the video playback information of the associated distributed video may be the total playback count of the associated distributed video or the number of associated distributed videos with a playback count higher than a set playback count threshold, which is not limited herein, as long as the higher the playback count, the higher the static predicted popularity indicator.

Based on this, to ensure availability and accuracy of data statistics, and real-time performance of streaming data, the static predicted popularity indicator may be calculated respectively based on granularity aggregation and real-time data of the associated distributed video. Whether to perform the transcoding operation on the video to be transcoded is determined based on the calculated static predicted popularity indicator.

In an implementation of the present disclosure, the target video transcoding mode is the dynamic transcoding strategy. The transcoding operation is performed on the video to be transcoded based on the target video transcoding mode to obtain a transcoded video file corresponding to the video to be transcoded, including: determining video playback information of a scenario distributed video in a business scenario that the video to be transcoded belongs to as a dynamic strategy reference parameter within a set time period; determining a dynamic predicted popularity indicator of the video to be transcoded based on the dynamic strategy reference parameter; and performing the transcoding operation on the video to be transcoded to obtain the transcoded video file corresponding to the video to be transcoded when the dynamic predicted popularity indicator is higher than a set dynamic popularity threshold.

Typically, in some specific periods (e.g., early morning), for businesses with inelastic scaling resources, the system may have more idle resources. In this case, how to select a larger number of videos for high-complexity transcoding to gain bandwidth benefits in the future may be considered. The video transcoding strategy in specific periods may be defined as the dynamic transcoding strategy. The set time period may be preset based on an idle resource time period of the system. For example, when the video popularity of a business is high, the video popularity is also high after a video to be transcoded that is associated with the business is transcoded and published. Based on this, for a business scenario with high popularity, the popularity of the video to be transcoded is predicted based on playback data of other videos in the business scenario, and when the predicted popularity of the video to be transcoded is high, the transcoding operation on the video to be transcoded can be directly triggered.

The distributed video in the business scenario that the video to be transcoded belongs to may be obtained as the scenario distributed video of the video to be transcoded, the historical playback information of the scenario distributed video within the set time period is obtained as the video playback information of the scenario distributed video, the dynamic predicted popularity indicator is calculated based on the video playback information of the scenario distributed video, and whether the transcoding operation is performed on the video to be transcoded is determined based on the dynamic predicted popularity indicator. The set time period may be set according to actual needs. The dynamic predicted popularity indicator calculated based on the video playback information of the scenario distributed video may be the total playback count of the scenario distributed video or the number of scenario distributed videos with a playback count higher than a set playback count threshold. A neural network model may also be constructed to predict the dynamic predicted popularity indicator of the video to be transcoded based on user attributes and business scenarios. There are no limitations herein, as long as the higher the playback count, the higher the dynamic predicted popularity indicator.

Trigger control dominated by remaining resources may be achieved through the dynamic transcoding strategy. Through peak-load shifting and by utilizing an off-peak period, dynamic transcoding is performed based on a resource remaining condition to achieve a more "forward-looking" predictive capability. Compared to real-time and online popularity, an emphasis is placed on a "current" decision-making method, which can better predict videos with long-tail playback modes.

In an implementation of the present disclosure, the target video transcoding mode is the remaining resource scheduling strategy. The transcoding operation is performed on the video to be transcoded based on the target video transcoding mode to obtain a transcoded video file corresponding to the video to be transcoded, including: determining a transcoding priority of the video to be transcoded; determining target transcoding time of the video to be transcoded based on a resource quota and the transcoding priority; and performing the transcoding operation on the video to be transcoded at the target transcoding time to obtain the transcoded video file corresponding to the video to be transcoded.

The remaining resource scheduling strategy may be an advanced expansion that dynamically extends the definition of system idle time from a natural time period to a whole day. Based on a current quota usage condition, the system inside adaptively selects a candidate task to be performed from a pool of transcoding tasks to be performed. When high-priority or reserved tasks are accumulated, the scheduling strategy is dynamically adjusted. Meanwhile, the global-based strategy may also achieve transparent cross-cluster scheduling for businesses, and even heterogeneous transcoding.

In this embodiment, the transcoding priority of the video to be transcoded may be determined based on the user that the video to be transcoded belongs to. For example, the priority of the user that the video to be transcoded belongs to may be used as the transcoding priority of the video to be transcoded, or may also be determined based on a business scenario that the video to be transcoded belongs to, for example, the priority of the business scenario that the video to be transcoded belongs to may be used as the transcoding priority of the video to be transcoded. There are no limitations herein. The priority of the user that the video to be transcoded belongs to may be determined based on the playback popularity of the distributed video of the user or the number of followers that the user has. There are no limitations herein. Exemplarily, the priority may be divided based on the number of fans/followers for the user. Transcoding is performed based on the remaining resource scheduling strategy, and the idle resources of the system can be fully utilized to achieve reasonable utilization of the computing resources.

In an implementation of the present disclosure, the target video transcoding mode is the real-time transcoding strategy. The transcoding operation is performed on the video to be transcoded based on the target video transcoding mode to obtain a transcoded video file corresponding to the video to be transcoded, including: determining, in response to a detected video playback request, a playback video parameter associated with the video playback request; and transcoding the video to be transcoded based on the playback video parameter to obtain the transcoded video file.

Asynchronous transcoding may also be replaced with real-time transcoding based on data analysis. Transcoding is triggered only when the user accesses resources, thereby reducing the use of the computing/storage resources and allocating the resources to the higher-priority businesses. The video playback request is initiated when the user accesses the resources. After the video playback request initiated by the user is detected, the video to be transcoded is transcoded in real time. The storage cost caused by early transcoding is avoided, and the storage resources are saved.

Real-time transcoding reduces, through zero-copy, data copying and context switching during file queries. Cold start time is shortened through example preheating/reservation. Additionally, blocking and waiting are reduced through independent clusters and spread scheduling. By using a graphics processing unit (GPU) for transcoding, the transcoding duration is shortened, thereby achieving experience similar to the asynchronous transcoding. The overall task initiation time is less than 20ms, and for videos within 20s, the average transcoding time (avg) is less than 1.5s. Meanwhile, to prevent resource wastage in the independent clusters, other strategies may dynamically allocate resources based on a real-time resource scheduling mechanism to independent clusters shared with real-time tasks, thereby increasing a resource utilization rate.

According to the technical solution of this embodiment of the present disclosure, the target video transcoding mode is determined based on the video distribution scenario of the video to be transcoded; and the transcoding operation is performed on the video to be transcoded based on the target video transcoding mode to obtain the transcoded video file corresponding to the video to be transcoded, and the transcoded video file is stored, so as to generate the target playback video for playback based on the transcoded video file when the video playback request is detected. By adjusting the transcoding strategies for different videos to be transcoded for video transcoding, the technical problem that the computing resources cannot satisfy the demand for computing power in video on demand is solved, and optimization of the transcoding operation in video on demand and reasonable utilization of the computing resources are achieved.

According to this embodiment of the present disclosure, the target video transcoding mode is determined based on the video distribution scenario of the video to be transcoded; and the transcoding operation is performed on the video to be transcoded based on the target video transcoding mode to obtain the transcoded video file corresponding to the video to be transcoded, and the transcoded video file is stored, so as to generate the target playback video for playback based on the transcoded video file when the video playback request is detected. By adjusting the transcoding strategies for different videos to be transcoded for video transcoding, the technical problems of unreasonable video processing and high cost in the video-on-demand system are solved, and the effects of optimizing the transcoding operation in video on demand, reasonably utilizing the computing resources, and reducing the video processing cost are achieved.

FIG. 2 is a structural schematic diagram of a video-on-demand system according to an embodiment of the present disclosure. As shown in FIG. 2, the video-on-demand system includes a transcoding layer, a computing layer, a data layer, a playback layer, and a storage layer.

In this embodiment, the transcoding layer prioritizes the scheduling of a high-priority task to trigger contribution transcoding based on a transcoding priority controlled by a business party. At the same time, the business may also register a transcoding strategy to trigger an additional transcoding workflow for a contribution with a priority greater than or equal to a specific threshold. One practice of this type of abstract behavior is to divide priorities based on the number of fans/followers, such that for users with more followers, the higher playback count results in a higher confidence level, which satisfies direct business needs. For registering a high-priority contribution, a transcoding strategy of a coder is synchronously triggered.

Based on this, the business may also register a model strategy. A strategy platform supports a plurality of types of model injections. A video predicted to have a higher priority may directly trigger high-complexity transcoding in a cold start stage. A feature vector of an input model is business-side information, such as public information of a user (the number of fans, the number of followers, the number of likes, etc.) and aggregated-dimension historical information (a playback count in the past 7 days, etc.). Any sliding windows may be dynamically maintained through a combination of daisy chain topology and efficient memory data structure design, thereby satisfying the requirements of multi-class quadratic aggregation models.

Model strategies may include a real-time strategy, an offline strategy, and a remaining resource scheduling strategy. In this embodiment of the present disclosure, the method for dividing and naming the model strategies is not exactly the same as the method for dividing and naming the transcoding strategies in the above method embodiment. For example, the "real-time strategy" in this embodiment is not the "real-time transcoding strategy" in the above method embodiment. In addition, the concept of "static" involved in this embodiment is also different from the "static" in the above method embodiment.

### 1. Real-time strategy

The real-time strategy needs to consider dynamic information, that is, the popularity of a video to be transcoded is determined based on the real-time popularity of the video. To calculate the popularity of the video to be transcoded, calculation may be performed through a combination of aggregated statistics of playback events at a 5-minute granularity and down-sampled real-time event data streams, thereby balancing the accuracy of batch-processed data with the real-time performance of the streaming data, and achieving mutual disaster recovery in the case that one data stream is unavailable. Calculation may be performed by supporting two different online statistical methods: □ triggering X transcoding for a video with an event statistical magnitude reaching N in the past T time; and □ triggering X transcoding for a video with an event statistical magnitude reaching TopK in the past T time.

From the perspective of a system architecture, a stateless worker is used to consume upstream batch-processed data/streaming data and "persist" the upstream batch-processed data/streaming data to the data layer. The stateless design facilitates horizontal extension, thereby achieving high availability (HA) and high performance computing (HPC). The data layer maintains real-time popularity information for a plurality of window lengths. Through sharding and master-slave methods, the HA is achieved, and high-concurrency scenarios are handled. A stateful agent is used to calculate real-time popularity in the data layer and trigger a transcoding process based on a registered strategy, and the agent ensures the HA through a master-slave mode. The stateful agent may be an event aggregation within a set time period. The stateless worker may be a video recommendation, etc.

### 2. Offline strategy

Typically, in some specific periods (e.g., early morning), for businesses with inelastic scaling resources, the system may have more idle resources. In this case, how to select a larger number of videos for high-complexity transcoding to gain bandwidth benefits in the future may be considered. Therefore, a strategy center also supports an offline timed trigger strategy based on machine learning/statistical analysis. In an offline model, features may be divided into two categories: dynamic data and static data. The dynamic data may include a current video playback count, the number of likes, etc.; and the static data may include a video duration classification, AI scores under different models, author attributes, etc. The maximum utilization of the idle resources can be achieved through an offline triggering method. However, the method involves a large amount of transcoding, and even a small false positive rate may result in a certain number of negative samples. For the above problem, the storage cost is reduced to the maximum through intelligent cold and hot storage migration of the video. The above problem may also lead to a certain degree of playback loss.

### 3. Remaining resource scheduling strategy

The remaining resource scheduling strategy is an advanced expansion that dynamically extends the definition of system idle time from a natural time period to a whole day. A transcoding time period may be determined based on the priority of the video to be transcoded, and then transcoding is performed.

Transcoding and storage are linked. The transcoded video file obtained after transcoding is stored in the storage layer. After the transcoded video file is stored, the stored file may be migrated, deleted, and replaced. It is possible to adapt to multi-path data inputs through a mode of a data warehouse technology, relying on online/offline message queues. The multi-path data inputs include a playback event, a degradation event (e.g., coding format degradation, resolution degradation, and watermark degradation), business data, model data, resource data, etc.

From the perspective of platform development (vertical dimension), a complete strategy group should be composed of three layers of encapsulation: an on-demand strategy group encapsulation layer, including basic definitions of a playback/storage/transcoding strategy module; a module strategy encapsulation layer, where each module is formed by overlaying a plurality of atomic configuration capabilities, and the strategy platform provides corresponding abstractions; and a module atomic capability definition layer, which may be extended/added according to certain specifications. When a business transcoding strategy is customized, it is often necessary to configure a corresponding storage optimization strategy. For example, for stored video resources, the platform hopes to delete some videos "satisfying conditions" to reduce the storage cost, and meanwhile "triggering transcoding in real time" is performed if the user accesses the video. The "satisfying conditions" corresponds to a storage strategy, and the "triggering transcoding in real time" corresponds to an example of a transcoding strategy. When the video is transcoded, how to distribute a file is a configuration of a playback/distribution strategy.

The general static strategic model provided in this embodiment of the present disclosure solves the universal problems that most businesses have. Based on the static, some real-time decision-making models based on runtime inputs are overlaid to deeply optimize the resource utilization efficiency. The business is effectively helped to enhance the playback experience, and the computing, storage and bandwidth costs are saved.

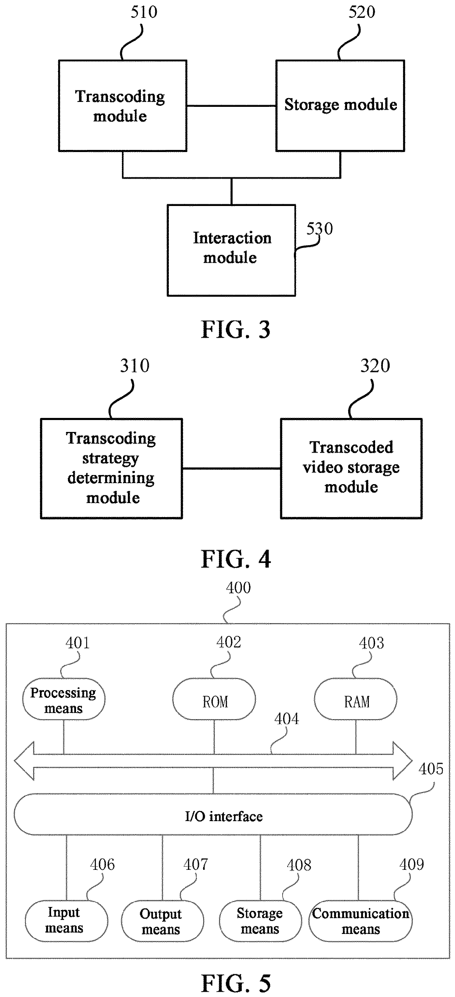

FIG. 3 is a structural schematic diagram of another video-on-demand system according to an embodiment of the present disclosure. As shown in FIG. 3, the system includes a transcoding module 510, a storage module 520, and an interaction module 530.

The transcoding module 510 is configured to determine a target video transcoding mode based on a video distribution scenario of a video to be transcoded, perform a transcoding operation on the video to be transcoded based on the target video transcoding mode to obtain a transcoded video file corresponding to the video to be transcoded, and send the transcoded video file to the storage module; the storage module 520 is configured to store the transcoded video file; and the interaction module 530 is configured to receive a video playback request, determine playback video parameters associated with the video playback request, obtain a target video file from the transcoding module or the storage module based on the playback video parameters, and generate response information for the video playback request based on the target video file.

The transcoding module 510 may perform the video transcoding method according to any embodiment of the present disclosure. The storage module 520 is configured to store the transcoded video file obtained after transcoding by the transcoding module, and support deletion, replacement, and migration of the transcoded video file. The deletion of the transcoded video file may be the deletion of the transcoded video file when an access frequency parameter of the transcoded video file is less than a set frequency parameter threshold. When an access probability parameter of the transcoded video file is small, in order to reduce the storage cost, the transcoded video file in the storage module may be deleted. When the user needs to access the transcoded video file, the interaction module 530 performs real-time transcoding by sending a transcoding request to the transcoding module 510.

FIG. 4 is a structural schematic diagram of a video transcoding apparatus according to an embodiment of the present disclosure. As shown in FIG. 4, the apparatus includes:
a transcoding strategy determining module 310, configured to determine a target video transcoding mode based on a video distribution scenario of a video to be transcoded; and a transcoded video storage module 320, configured to perform a transcoding operation on the video to be transcoded based on the target video transcoding mode to obtain a transcoded video file corresponding to the video to be transcoded, and store the transcoded video file, so as to generate a target playback video for playback based on the transcoded video file when a video playback request is detected.

According to the technical solution of this embodiment, the target video transcoding mode is determined based on the video distribution scenario of the video to be transcoded; and the transcoding operation is performed on the video to be transcoded based on the target video transcoding mode to obtain the transcoded video file corresponding to the video to be transcoded, and the transcoded video file is stored, so as to generate the target playback video for playback based on the transcoded video file when the video playback request is detected. By adjusting transcoding strategies for different videos to be transcoded for video transcoding, the technical problem that computing resources cannot satisfy the demand for computing power in video on demand is solved, and the effects of optimizing the transcoding operation in video on demand and reasonably utilizing the computing resources are achieved.

Based on the foregoing embodiment, the transcoding strategy determining module 310 is configured to:
determine a cost-associated parameter associated with the video distribution scenario, and determine a target video transcoding mode based on the cost-associated parameter.

Based on the foregoing embodiment, the target video transcoding mode includes at least one of a static transcoding strategy, a dynamic transcoding strategy, a remaining resource scheduling strategy, and a real-time transcoding strategy.

Based on the foregoing embodiment, the target video transcoding mode is the static transcoding strategy, and the transcoded video storage module 320 is configured to:
obtain video playback information of a distributed video associated with the video to be transcoded as a static strategy reference parameter; determine a static predicted popularity indicator of the video to be transcoded based on the static strategy reference parameter; and perform a transcoding operation for the video to be transcoded to obtain a transcoded video file corresponding to the video to be transcoded when the static predicted popularity indicator is higher than a set static popularity threshold.

Based on the foregoing embodiment, the target video transcoding mode is the dynamic transcoding strategy, and the transcoded video storage module 320 is configured to: determine video playback information of a scenario distributed video in a business scenario that the video to be transcoded belongs to as a dynamic strategy reference parameter within a set time period; determine a dynamic predicted popularity indicator of the video to be transcoded based on the dynamic strategy reference parameter; and perform a transcoding operation on the video to be transcoded to obtain a transcoded video file corresponding to the video to be transcoded when the dynamic predicted popularity indicator is higher than a set dynamic popularity threshold.

Based on the foregoing embodiment, the target video transcoding mode is the remaining resource scheduling strategy, and the transcoded video storage module 320 is configured to: determine a transcoding priority of the video to be transcoded; determine target transcoding time of the video to be transcoded based on a resource quota and the transcoding priority; and perform a transcoding operation on the video to be transcoded at the target transcoding time to obtain a transcoded video file corresponding to the video to be transcoded.

Based on the foregoing embodiment, the target video transcoding mode is the real-time transcoding strategy, and the transcoded video storage module 320 is configured to:
determine, in response to a detected video playback request, a playback video parameter associated with the video playback request; and transcode the video to be transcoded based on the playback video parameter to obtain a transcoded video file.

The video transcoding apparatus provided by this embodiment of the present disclosure may perform the video transcoding method provided by any embodiment of the present disclosure, and has the corresponding functional modules and effects for performing the method.

The various units and modules included in the above apparatus are only divided according to functional logics, but are not limited to the above division, as long as the corresponding functions can be achieved; and in addition, the names of the plurality of functional units are only for the convenience of distinguishing each other, and are not intended to limit the scope of protection of the embodiments of the present disclosure.

FIG. 5 is a structural schematic diagram of an electronic device according to an embodiment of the present disclosure. Referring to FIG. 5 as below, FIG. 5 illustrates a structural schematic diagram of an electronic device (e.g., a terminal device or a server in FIG. 5) 400 suitable for implementing an embodiment of the present disclosure. The terminal device in this embodiment of the present disclosure may include mobile terminals such as a mobile phone, a notebook computer, a digital radio receiver, a personal digital assistant (PDA), a portable Android device (PAD), a portable media player (PMP), and a vehicle-mounted terminal (e.g., a vehicle-mounted navigation terminal), and fixed terminals such as a digital television (TV) and a desk computer. The terminal device 400 shown in FIG. 5 is merely an example, which should not impose any limitations on functions and application ranges of this embodiment of the present disclosure.

As shown in FIG. 5, the electronic device 400 may include a Processing means (e.g., a central processing unit and a graphics processing unit) 401, which may perform various appropriate actions and processing according to programs stored on a read-only memory (ROM) 402 or loaded from a Storage means 408 into a random access memory (RAM) 403. The RAM 403 further stores various programs and data required for the operation of the electronic device 400. The Processing means 401, the ROM 402, and the RAM 403 are connected to one another through a bus 404. An input/output (I/O) interface 405 is also connected to the bus 404.

Typically, the following apparatuses may be connected to the I/O interface 405: an Input means 406, including, for example, a touchscreen, a touchpad, a keyboard, a mouse, a camera, a microphone, an accelerometer, and a gyroscope; an Output means 407, including, for example, a liquid crystal display (LCD), a speaker, and a vibrator; the Storage means 408, including, for example, a magnetic tape and a hard drive; and a Communication means 409. The Communication means 409 may allow the electronic device 400 to perform wireless or wired communication with other devices to exchange data. Although FIG. 5 illustrates the electronic device 400 with various apparatuses, and it is not necessary to implement or have all the shown apparatuses. Alternatively, more or fewer apparatuses may be implemented or provided.

According to this embodiment of the present disclosure, the foregoing process described with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such embodiment, the computer program may be downloaded and installed from the network through the Communication means 409, or installed from the Storage means 408, or installed from the ROM 402. The computer program, when executed by the Processing means 401, performs the above functions defined in the method in the embodiments of the present disclosure.

The names of messages or information exchanged between a plurality of apparatuses in the implementations of the present disclosure are used for illustrative purposes only, and are not used to limit the scope of these messages or information.

The electronic device provided by this embodiment of the present disclosure and the video transcoding method provided by the foregoing embodiment belong to the same concept, and for technical details not described in detail in this embodiment, reference may be made to the foregoing embodiment. This embodiment and the foregoing embodiment have the same effects.

An embodiment of the present disclosure provides a computer storage medium having a computer program stored thereon, where the program, when executed by a processor, implements the video transcoding method provided by the foregoing embodiment.

The computer-readable medium in the present disclosure may be a computer-readable signal medium, or a computer-readable storage medium, or any combination thereof. For example, the computer-readable storage medium may include: electrical, magnetic, optical, electromagnetic, infrared, or semiconductor systems, apparatuses, or devices, or any combination of the above. Examples of the computer-readable storage medium may include, but are not limited to: an electrical connection with one or more wires, a portable computer disk, a hard drive, a RAM, a ROM, an erasable programmable read-only memory (EPROM or a flash memory), fiber optics, a portable compact disc read-only memory (CD-ROM), an optical storage device, a magnetic storage device, or any proper combination of the above. In the present disclosure, the computer-readable storage medium may be any tangible medium including or storing a program, and the program may be used by or in conjunction with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with the instruction execution system, apparatus, or device. The program code included in the computer-readable medium may be transmitted by any suitable medium including: a wire, an optical cable, radio frequency (RF), etc., or any suitable combination of the above.

In some implementations, a client and a server may communicate using any currently known or future-developed network protocols such as a hypertext transfer protocol (HTTP), and may also be interconnected with digital data communication in any form or medium (e.g., a communication network). Examples of the communication network include a local area network (LAN), a wide area network (WAN), an internetwork (e.g., the Internet), a peer-to-peer network (e.g., an ad hoc peer-to-peer network), and any currently known or future-developed network.

The computer-readable medium may be included in the above electronic device; or may also separately exist without being assembled in the electronic device.

The computer-readable medium carries one or more programs. The one or more programs, when executed by the electronic device, cause the electronic device to:
determine a target video transcoding mode based on a video distribution scenario of a video to be transcoded; perform a transcoding operation on the video to be transcoded based on the target video transcoding mode to obtain a transcoded video file corresponding to the video to be transcoded, and store the transcoded video file, so as to generate a target playback video for playback based on the transcoded video file when a video playback request is detected.

The computer program code for performing the operations of the present disclosure may be written in one or more programming languages or a combination thereof. The programming languages include object-oriented programming languages such as Java, Smalltalk, C++, as well as conventional procedural programming languages such as "C" language or similar programming languages. The program code may be executed entirely on a user computer, partly on the user computer, as a stand-alone software package, partly on the user computer and partly on a remote computer, or entirely on the remote computer or a server. In the case of involving the remote computer, the remote computer may be connected to the user computer through any type of network, including a LAN or WAN, or may be connected to an external computer (e.g., utilizing an Internet service provider for Internet connectivity).

The flowcharts and the block diagrams in the accompanying drawings illustrate system architectures, functions, and operations possibly implemented by the system, the method and the computer program product according to the various embodiments of the present disclosure. In this regard, each block in the flowcharts or the block diagrams may represent a module, a program segment, or a part of code, and the module, the program segment, or the part of code includes one or more executable instructions for implementing specified logic functions. It should also be noted that in some alternative implementations, the functions marked in the blocks may also occur in an order different from that marked in the accompanying drawings. For example, two consecutively-shown blocks may actually be executed in parallel basically, but sometimes may also be executed in a reverse order, which depends on involved functions. It should also be noted that each block in the block diagrams and/or the flowcharts, and a combination of the blocks in the block diagrams and/or the flowcharts may be implemented by using a dedicated hardware-based system that executes specified functions or operations, or may be implemented by using a combination of dedicated hardware and computer instructions.

The related units described in the embodiments of the present disclosure may be implemented by software or hardware. The name of the unit does not limit the unit in a certain case. For example, a first acquisition unit may also be described as "a unit for obtaining at least two Internet protocol addresses".

Herein, the functions described above may be at least partially executed by one or more hardware logic components. For example, exemplary hardware logic components that can be used include, but are not limited to a field programmable gate array (FPGA), an application specific integrated circuit (ASIC), application specific standard parts (ASSPs), a system on chip (SOC), a complex programmable logic device (CPLD), etc.

In the context of the present disclosure, a machine-readable medium may be a tangible medium that may include or store a program used by or in combination with the instruction execution system, apparatus, or device. The machine-readable medium may be a machine-readable signal medium or a machine-readable storage medium. The machine-readable medium may include electronic, magnetic, optical, electromagnetic, infrared, or semiconductor systems, apparatuses, or devices, or any suitable combination of the above content. Examples of the machine-readable storage medium may include: an electrical connection based on one or more wires, a portable computer disk, a hard drive, a RAM, a ROM, an EPROM or a flash memory, fiber optics, a CD-ROM, an optical storage device, a magnetic storage device, or any suitable combination of the above.

Further, although the plurality of operations are described in a particular order, it should not be understood as requiring these operations to be performed in the shown particular order or in a sequential order. In certain environments, multitasking and parallel processing may be advantageous. Similarly, although several implementation details are included in the above discussion, these implementation details should not be interpreted as limitations on the scope of the present disclosure. Some features described in the context of separate embodiments may also be implemented in combination in a single embodiment. Conversely, various features described in the context of a single embodiment may also be implemented separately or in any suitable sub-combination in a plurality of embodiments.

## Claims

1. A video transcoding method, comprising:
determining a target video transcoding mode based on a video distribution scenario of a video to be transcoded; and
obtaining a transcoded video file corresponding to the video to be transcoded by performing a transcoding operation on the video to be transcoded based on the target video transcoding mode, and storing the transcoded video file, so as to generate a target playback video for playback based on the transcoded video file in response to detecting a video playback request.

2. The method according to claim 1, wherein determining the target video transcoding mode based on the video distribution scenario of the video to be transcoded comprises:
determining a cost-associated parameter associated with the video distribution scenario, and determining the target video transcoding mode based on the cost-associated parameter.

3. The method according to claim 1, wherein the target video transcoding mode comprises at least one of a static transcoding strategy, a dynamic transcoding strategy, a remaining resource scheduling strategy, and a real-time transcoding strategy.

4. The method according to claim 3, wherein the target video transcoding mode is the static transcoding strategy, and obtaining the transcoded video file corresponding to the video to be transcoded by performing the transcoding operation on the video to be transcoded based on the target video transcoding mode comprises:
obtaining video playback information of a distributed video associated with the video to be transcoded as a static strategy reference parameter;
determining a static predicted popularity indicator of the video to be transcoded based on the static strategy reference parameters; and
in a case that the static predicted popularity indicator is higher than a set static popularity threshold, obtaining the transcoded video file corresponding to the video to be transcoded by performing the transcoding operation on the video to be transcoded.

5. The method according to claim 3, wherein the target video transcoding mode is the dynamic transcoding strategy, and obtaining the transcoded video file corresponding to the video to be transcoded by performing the transcoding operation on the video to be transcoded based on the target video transcoding mode comprises:
determining, within a set time period, video playback information of a scenario distributed video in a business scenario that the video to be transcoded belongs to as a dynamic strategy reference parameter;
determining a dynamic predicted popularity indicator of the video to be transcoded based on the dynamic strategy reference parameter; and
in a case that the dynamic predicted popularity indicator is higher than a set dynamic popularity threshold, obtaining the transcoded video file corresponding to the video to be transcoded by performing the transcoding operation on the video to be transcoded.

6. The method according to claim 3, wherein the target video transcoding mode is the remaining resource scheduling strategy, and obtaining the transcoded video file corresponding to the video to be transcoded by performing the transcoding operation on the video to be transcoded based on the target video transcoding mode comprises:
determining a transcoding priority of the video to be transcoded;
determining target transcoding time of the video to be transcoded based on a resource quota and the transcoding priority; and
obtaining the transcoded video file corresponding to the video to be transcoded by performing the transcoding operation on the video to be transcoded at the target transcoding time.

7. The method according to claim 3, wherein the target video transcoding mode is the real-time transcoding strategy, and obtaining the transcoded video file corresponding to the video to be transcoded by performing the transcoding operation on the video to be transcoded based on the target video transcoding mode comprises:
determining, in response to a detected video playback request, a playback video parameter associated with the video playback request; and
obtaining the transcoded video file by transcoding the video to be transcoded based on the playback video parameter.

8. A video transcoding apparatus, comprising:
a transcoding strategy determining module, configured to determine a target video transcoding mode based on a video distribution scenario of a video to be transcoded; and
a transcoded video storage module, configured to obtain a transcoded video file corresponding to the video to be transcoded by performing a transcoding operation on the video to be transcoded based on the target video transcoding mode, and to store the transcoded video file, so as to generate a target playback video for playback based on the transcoded video file in response to detecting a video playback request.

9. An electronic device, comprising:
at least one processor; and
a storage, configured to store at least one program,
the at least one program, when executed by the at least one processor, causing the at least one processor to implement the video transcoding method according to any of claims 1 to 7.

10. A storage medium comprising computer executable instructions, the computer executable instructions, when executed by a computer processor, being configured to perform the video transcoding method according to any of claims 1 to 7.

11. A computer program product, comprising a computer program carried on a non-transitory computer-readable medium, the computer program comprising program code configured to perform the video transcoding method according to any of claims 1 to 7.

12. A video-on-demand system, comprising a transcoding module, a storage module, and an interaction module, wherein
the transcoding module is configured to determine a target video transcoding mode based on a video distribution scenario of a video to be transcoded, to obtain a transcoded video file corresponding to the video to be transcoded by performing a transcoding operation on the video to be transcoded based on the target video transcoding mode, and to send the transcoded video file to the storage module;
the storage module is configured to store the transcoded video file; and
the interaction module is configured to receive a video playback request, to determine a playback video parameter associated with the video playback request, to obtain a target video file from the transcoding module or the storage module based on the playback video parameter, and to generate response information for the video playback request based on the target video file.

13. The system according to claim 12, wherein the storage module is further configured to:
delete the transcoded video file in response to an access frequency parameter of the transcoded video file being less than a set frequency parameter threshold.
